# FASCICULE DE BREVET EUROPEEN

(11) **EP 0 599 716 B1**
(45) Date de publication et mention de la délivrance du brevet: **28.07.1999**
(21) Numéro de dépôt: 93402826.7
(22) Date de dépôt: 22.11.1993
(51) Int. Cl.: B62L 1/00, B62L 5/20, B60T 8/54, B62L 1/12

(54) **Procédé et dispositif de freinage notamment pour cycles**
Bremsverfahren und -vorrichtung, insbesondere für Fahrräder
Method of, and device for braking, especially for bicycles

(30) Priorité: 26.11.1992 FR 9214237
(43) Date de publication de la demande: 01.06.1994
(73) Titulaire: SUMPAR, 76520 BOOS (FR)
(72) Inventeur: Girard, Philippe Daniel, F-60200 Margny les Compiègne (FR); Rocca, Philippe Roger, F-60200 Compiègne (FR)
(74) Mandataire: Rataboul, Michel Charles

(56) Documents cités:
- FR-A- 2 591 976
- US-A- 4 055 235

## Description

L'invention concerne le freinage de véhicules et en particulier le freinage de véhicules à deux roues, par action (immobilisation ou simple ralentissement) sur un élément mobile tel qu'une roue, un disque ou un tambour de freinage.

Si l'on considère par exemple le cas des cycles, le dispositif de freinage comprend des poignées fixées au guidon et destinées à commander l'action de plusieurs patins par l'intermédiaire de câbles ou de tiges. Il est prévu, en général, un patin de chaque coté d'une roue, chaque paire étant maintenue par un support muni de moyens permettant de presser lesdits patins contre les roues afin de contrarier leur rotation, soit pour ralentir, soit pour s'arrêter.

Lorsque l'on agit sur les poignées, on provoque le déplacement des patins vers l'élément mobile en rotation, jusqu'à ce qu'ils accostent plus ou moins brutalement selon la force avec laquelle on actionne les poignées. De toute façon, les patins sont au contact ou pas de l'élément mobile, c'est-à-dire que le premier temps du freinage est une action par tout ou rien.

L'ajustement de la force de freinage se fait en pressant plus ou moins les poignées, ce qui provoque sur l'élément mobile un effort plus ou moins énergique.

L'effort subi par l'élément mobile en rotation se traduit plus ou moins directement par une action sur la surface de roulage.

Or, si la cinématique et sa commande restent constantes sur un engin donné, il n'en est pas de même pour la surface du roulage qui, sauf exception, varie constamment : un sol bitumé en bon état est, par endroits, parsemé de graviers: un sol sec a quelques flaques d'eau; de l'herbe rase fait brusquement place à de la boue etc.

De ce fait, une action correcte sur le système de freinage à un instant donné devient dangereuse l'instant d'après, sans qu'il soit réellement possible d'ajuster constamment l'action sur les poignées par observation du sol car, de plus, ce qui est vrai pour la roue avant peut ne pas l'être pour la roue arrière.

Il en résulte, surtout lorsque l'on commande le freinage de la roue avant, non seulement un risque important de dérapage et de perte de contrôle, mais également la chute de l'usager, notamment par basculement au-dessus du guidon. Ceci est particulièrement dangereux pour les cyclomoteurs et les vélos tous terrains.

Pour remédier au problème du blocage des roues, on connaît dans le cas des véhicules automobiles, le système de freinage connu dans le commerce sous le nom déposé "ABS". Ce système consiste à prévoir des capteurs sur les disques de freinage qui équipent classiquement les véhicules automobiles. Ces capteurs ont pour rôle de transmettre des informations concernant la vitesse de rotation à un circuit électronique afin que les patins de freinage (dits "plaquettes") s'écartent du disque de freinage avant blocage de la roue puis reviennent au contact du disque, puis s'écartent à nouveau, etc.

Bien entendu, l'alternance de l'effort exercé sur les patins de freinage pour les mettre au contact du disque ou pas, est très rapide grâce au système d'assistance électronique. Elle est bien plus rapide que si le conducteur essayait de contrôler lui-même son freinage en appuyant puis en relâchant la pédale de frein plusieurs fois de suite, ce que l'on désigne parfois dans la pratique par "freinage en pointillé".

Le système de freinage ABS permet ainsi d'éviter le blocage des roues du véhicule et d'obtenir un freinage particulièrement efficace et rapide sur une distance réduite.

Néanmoins, ce dispositif de freinage ABS n'est pas transposable à tous les cas et notamment aux véhicules à deux roues qui doivent rester légers et bon marché.

On a déjà pensé à améliorer le freinage des véhicules à deux roues en s'inspirant du "freinage en pointillé".

En effet, le brevet FR-A-2.591.976 prévoit un relâchement complet des patins de frein avec suppression totale de contact entre le patin et la roue, ce qui présente un très grave inconvénient qui vient du fait que le cycliste compense inconsciemment la perte de freinage qui est totale, en maintenant serrée la poignée habituelle de commande, ce qui rend le système inopérant car une fois rattrapé le jeu existant entre le patin et la roue, le dispositif revient à la position initiale de freinage, de sorte que le dispositif ne sert, au mieux, qu'à retarder la blocage et non à l'empêcher.

La présente invention, au contraire, prévoit qu'il y a toujours un contact de freinage, qui va d'un maximum à un minimum automatiquement modulés, sans provoquer ni le blocage brutal de la roue, ni l'absence totale de frein.

Dans le document cité le freinage est momentanément supprimé alors que selon la présente invention le freinage est modifié.

On connaît aussi le brevet US-A-4.055.235 qui décrit un dispositif destiné à augmenter la force de freinage, ce qui est très exactement l'inverse de la présente invention.

L'objectif de l'invention est donc de fournir des moyens de freinage permettant d'éviter le blocage brutal d'une roue et donc la chute de l'usager mais également d'améliorer l'efficacité du freinage en général.

Les moyens de l'invention sont différents de ceux de l'ABS parce que le paramètre fondamental d'ajustement du freinage sur l'ABS est la vitesse de rotation de la roue, alors que les moyens de l'invention sont basés sur l'effort tangentiel de frottement entre la jante de roue et le patin de frein.

Mais l'effet obtenu est comparable puisque les deux systèmes permettent d'atteindre le même objectif qui est de réduire les risques de blocages dangereux. L'usager peut donc freiner d'une certaine manière, le dispositif adaptant automatiquement l'effort de freinage réel aux forces développées du fait même du fonctionnement.

A cette fin, l'invention a pour objet un procédé de freinage d'un élément mobile tel qu'une roue, notamment pour véhicule à deux roues, qui consiste à appuyer au moins un organe de frottement contre l'élément mobile en appliquant un effort sur une surface de contact de l'élément mobile en direction sensiblement normale afin d'engendrer par friction un effort de freinage dans le plan de la surface de contact tant qu'un freinage est nécessaire, caractérisé en ce qu'en outre le procédé consiste à diminuer durant le freinage, à partir d'un seuil déterminé de l'effort de freinage, corrélativement la superficie de la surface de contact, sans qu'elle ne devienne nulle.

Selon une caractéristique complémentaire de l'invention, le procédé consiste à monter l'organe de frottement de manière mobile par rapport à sa monture le long d'une trajectoire courbe afin qu'il soit libre de se déplacer angulairement par rapport à l'élément mobile et à soumettre l'organe de frottement à une force élastique antagoniste d'équilibrage.

L'invention a également pour objet un dispositif de freinage, notamment pour véhicule à deux roues, du type comprenant au moins une monture de patin de freinage, montée mobile entre une position de repos dans laquelle le patin est maintenu à faible distance d'un élément mobile tel qu'une roue, et une position active dans laquelle il est en contact avec ledit élément mobile, le patin étant en outre monté mobile par rapport à la monture, et des moyens étant prévus pour faire passer la monture de la position de repos à la position active et vice versa, caractérisé en ce que chaque patin de freinage est monté mobile par rapport à sa monture le long d'une trajectoire courbe entre une position de début de freinage dans laquelle il est parallèle à l'élément mobile et en contact avec celui-ci sensiblement sur toute sa surface nominale et une position dans laquelle ledit patin fait un angle par rapport audit élément mobile et est en contact avec celui-ci selon une surface substantiellement inférieure à la surface nominale, un organe élastique antagoniste sollicitant chaque patin vers sa position de début de freinage.

Selon d'autres caractéristiques preferées de ce dispositif :
⇒ chaque patin est solidaire d'une tige qui est associée à une pièce montée mobile par rapport à sa monture le long d'une trajectoire courbe entre une position initiale dans laquelle le patin est en position active et parallèle à l'élément mobile et une position dans laquelle le patin fait un angle avec ledit élément mobile;
⇒ la pièce mobile par rapport à sa monture le long d'une trajectoire courbe est associée à des moyens élastiques de sollicitation;
⇒ les moyens élastiques de sollicitation sont constitués par un ressort;
⇒ les moyens élastiques de sollicitation sont constitués par une pièce élastique, notamment une pièce pleine en une matière élastomère:
⇒ les moyens élastiques de sollicitation comprennent des moyens de tarage de l'effort exercé sur le patin de freinage;
⇒ les moyens élastiques de sollicitation sont constitués par un ressort et les moyens de tarage par des organes de réglage de la compression du ressort.

L'invention sera mieux comprise à la lecture de la description détaillée donnée ci-après à titre d'exemple illustratif et non limitatif ainsi que des dessins dans lesquels :
Les figures 1 et 2 sont deux vues schématiques respectivement en perspective et en plan avec coupe partielle d'une partie d'un dispositif conforme à l'invention, comprenant un patin de freinage et ses organes de commande associés, en position de repos dans laquelle le patin est à petite distance d'une jante de roue de bicyclette, celle-ci n'étant donc pas freinée.
Les figures 3 et 4 sont deux vues schématiques en élévation montrant, par l'avant, le dispositif conforme à l'invention et illustrant le passage de la position neutre à la position active de ce dispositif.
Les figures 5 et 6 sont deux vues schématiques respectivement en perspective et en plan avec coupe partielle du dispositif des figures 1 et 2 dont le patin de freinage est en position active de début de freinage dans laquelle il est sensiblement parallèle à la jante de roue de bicyclette et en contact avec celle-ci selon toute la surface nominale dudit patin.
Les figures 7 et 8 sont deux vues schématiques respectivement en perspective et en plan avec coupe partielle du dispositif des figures 1 à 6, montrant ledit dispositif en position de pivotement, correspondant au soulagement du freinage.

Le dispositif selon l'invention va être décrit ci-après dans le cas d'un cycle tel qu'un vélo tous terrains mais, bien entendu, on peut prévoir d'autres applications telles que les freins à disques ou à tambours, pour tous les véhicules.

Par ailleurs, dans la description ci-après on se réfère à un dispositif de freinage qui ne possède qu'un seul patin alors que, généralement, dans la réalité, il y en a deux qui agissent en mâchoire. Mais il va de soi que l'invention s'applique à des dispositifs ayant indistinctement un ou plusieurs patins.

En se reportant au dessin, on voit qu'un dispositif de freinage conforme à l'invention comprend un boîtier 1 qui présente une partie tubulaire 2 par laquelle il est monté pivotant selon un axe substantiellement horizontal α matérialisé par un pivot 3 faisant partie du cadre d'une bicyclette dont on aperçoit en partie un montant 4. Le boîtier 1 est positionné de telle sorte qu'il soit au voisinage immédiat de la jante 5 d'une roue représentée en fantôme pour ne pas masquer les différents éléments du dispositif

Autour du pivot 3, se trouve un ressort hélicoïdal 6 dont les extrémités 7 et 8 rabattues parallèlement à l'axe α sont en butée respectivement contre le montant 4 et contre la partie tubulaire 2 après avoir mis le ressort 6 sous tension, son rôle étant de rappeler le boîtier 1 vers sa position dite "de repos" dans laquelle il est éloigné de la jante de roue 5. Bien entendu, dans la pratique ce montage peut être remplacé par tout autre équivalent à la portée de l'Homme de Métier.

A l'opposé du pivot 3, se trouve une chape 10 à laquelle est assujetti un câble 11 aboutissant à une poignée de manoeuvre de type connu (non représentée).

Les moyens par lesquels le câble 11 est assujetti au boitier 1 par la chape 10 et à la poignée de manoeuvre ne font pas partie de l'invention et sont à la portée de l'Homme de Métier.

Le boîtier 1 contient deux pièces mobiles et reliées l'une à l'autre : une pièce 12 est montée mobile en courbe sur une pièce 13 par un pion circulaire 14 engagé dans une lumière 15 du boîtier 1, cette pièce 13 étant montée coulissante par une tige 16 engagée dans une pièce 17 qui lui sert de guide rectiligne, en plus du pion 14 lui-même guidé par la lumière 15 parallèle à l'axe de la tige 16.

La pièce 17 a une partie filetée 17a qui est vissée dans un trou taraudé du boîtier 1 et une partie 17b dont l'intérieur est lisse pour assurer le coulissement de la tige 16 et l'extérieur présente un six pans permettant de manoeuvrer la pièce 17 pour la visser ou la dévisser par rapport au boîtier 1.

La pièce pivotante 12 porte un pion circulaire 18 placé dans une lumière rectiligne 19 du boîtier 1, oblique par rapport à l'axe de la tige 16.

Un ressort hélicoïdal 20 est placé autour de la tige 16 et prend appui par l'une de ses extrémités 21 contre l'intérieur de la partie tubulaire 17 et par son autre extrémité 22 contre la pièce coulissante 13, de telle sorte que ce ressort 20 est comprimé quand la pièce 13 se rapproche de la pièce 17 et se détend pour solliciter constamment la pièce coulissante 13 vers sa position dans laquelle elle est la plus éloignée de la pièce 17.

La pièce pivotante 12 est traversée d'un trou lisse 25 dans lequel s'étend une tige filetée 26 associée à des organes de fixation et de réglage 27 et 28, cette tige 26 étant solidaire d'une monture 29 pour un patin de freinage 30 en toute matière voulue, destiné à entrer en contact avec la jante de roue 5.

Cette disposition peut avoir des équivalents à la portée de l'Homme de Métier. Par exemple, la matière du patin 30 peut être surmoulée sur un insert solidaire de la tige 26, ce qui élimine la monture 29.

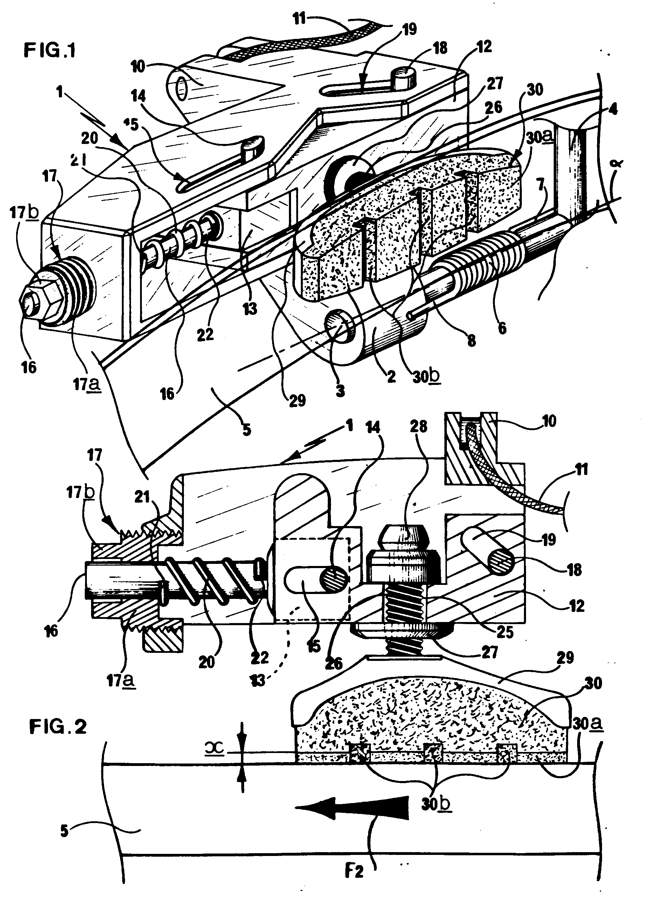

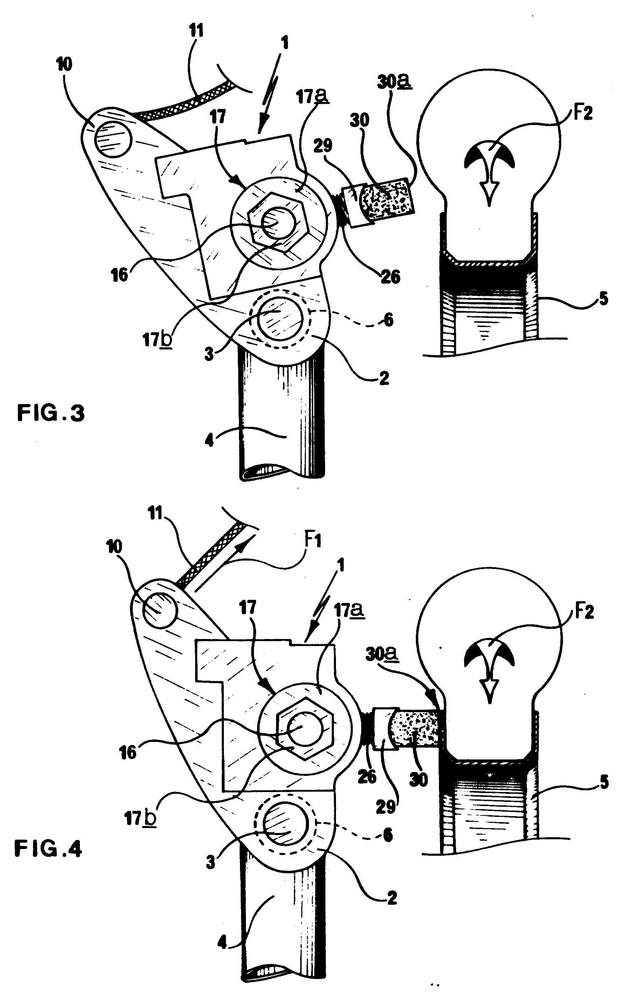

Le fonctionnement de ce dispositif est le suivant, étant précisé que pour la clarté de l'exposé on considère que la jante de roue est vue en plan, le dispositif étant situé latéralement et à la partie supérieure de la jante 5 pour les figures 1, 2 et 5 à 8, tandis que pour les figures 3 et 4, la jante 5 est vue de devant et est verticale, le dispositif étant placé en haut et sur le côté de ladite jante 5 :

Dans la position de repos représentée sur les figures 1 à 3, le système de freinage est inactif.

Le ressort 6 sollicite le boîtier 1 pour qu'il demeure stable dans une position angulaire telle que le patin 30 est situé à une petite distance x de la jante 5, position angulaire centrée sur l'axe α. Le câble 11 est représenté détendu puisque l'usager est censé ne pas agir sur la poignée de manoeuvre.

Le ressort 20 repousse la pièce coulissante 13, le pion 14 est à l'extrémité de la lumière 15 la plus éloignée de la pièce 17, ce qui sollicite la pièce pivotante 12 dans une orientation où la tige 26 qu'elle porte s'étend, perpendiculairement au plan de la jante 5, le patin 30 ayant sa face active 30a située obliquement par rapport audit plan de la jante 5 mais en considérant un plan vertical (figure 3).

En considérant le système vu en plan (figures 1 et 2), la face utile 30a du patin est parallèle au plan de la jante 5.

Lorsque l'usager veut freiner, il actionne la poignée de manoeuvre qui tend la câble 11 selon la flèche F1 et oblige le boîtier 1 à pivoter selon l'axe α, autour du pivot fixe 3.

Par ce mouvement angulaire de soulèvement, le boîtier 1 amène le patin 30 au contact de la jante 5 selon toute la surface nominale de la face utile 30a ou, plus exactement, selon la surface de contact maximale entre la jante 5 et le patin 30 (figures 4 à 6).

Par "surface nominale", on entend la surface de la face 30a telle qu'elle est conçue, c'est-à-dire en tenant compte des éventuels sillons 30b dont l'ouverture vient en déduction de la surface pleine théorique résultant du seul contour de la face utile 30a.

Plus l'usager sollicite la poignée de manoeuvre, plus forte est la traction sur le câble 11, plus est important l'effort du patin 30 sur la jante 5, plus énergique est le freinage.

Mais, contrairement à ce qui se passe avec les freins connus, un blocage brutal de la roue n'est plus possible.

En effet, le frottement de la jante 5 en mouvement de rotation contre le patin 30 immobile, a tendance à solidariser la jante 5 et le patin 30 : le patin 30 tend à arrêter la jante 5 et celle-ci tend à entraîner le patin 30 selon la flèche F2 indiquant le sens du mouvement de la jante 5.

Naturellement, il ne peut pas y avoir d'arrêt instantané et le patin ne peut pas immobiliser la jante 5. C'est l'inverse qui de produit, c'est-à-dire que le patin 30 est sollicité vers l'avant par la jante 5.

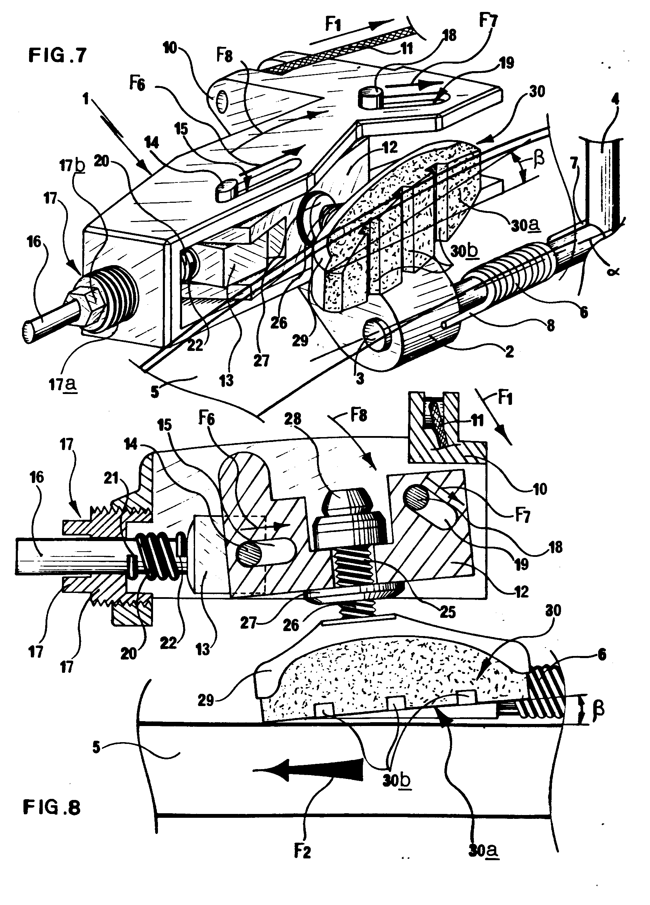

Le dispositif conforme à l'invention prévoit précisément d'utiliser ce mouvement virtuel et de faciliter le déplacement du patin 30 dans le sens naturel : en permettant à la pièce 12 de céder sous l'effort de sollicitation, on permet à la tige 26, à la monture 29 et au patin 30 de se déplacer en courbe dans un plan horizontal pour faire un angle β entre la face utile 30a et le plan de la jante 5, comme cela se voit sur les figures 7 et 8.

Ce mouvement du patin 30 ne doit se produire que si l'effort sur la jante 5 atteint une valeur prédéterminée et jugée critique, comme cela ressortira des explications qui suivent.

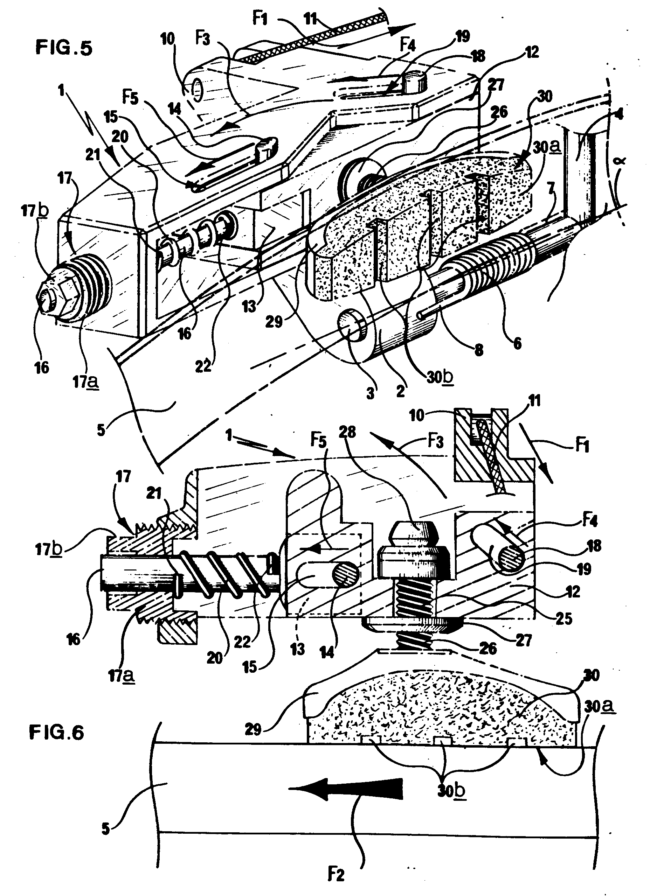

La disposition des lumières 15 et 19 est telle que la pièce 12, quand elle écarte le patin 30, a un mouvement non pas circulaire centré sur un seul axe mais un mouvement courbe sensiblement elliptique, comme l'évoque la flèche F3, car tout en pivotant dans le sens inverse des aiguilles d'une montre (figures 5 et 6), la pièce 12 avance du fait de l'obliquité de la lumière 19 et provoque la compression du ressort 20 par l'intermédiaire de la pièce coulissante 13 qu'elle pousse. En somme, la flèche F3 évoque la résultante des flèches F4 et F5 indiquant les sens dans lesquels se déplacent les pions 18 et 14 dans les lumières 19 et 15 (figures 5 et 6).

Cette cinématique n'entre en fonctionnement que sous l'effet d'entraînement de la jante 5 et à l'encontre de la résistance du ressort 20. En ajustant la tension de ce ressort 20, on effectue le tarage du dispositif car on coordonne le mouvement de pivotement du patin 30 et une valeur d'effort prédéterminée entre le patin 30 et la jante 5.

Pour régler la force d'équilibrage des moyens de rappel, c'est-à-dire pour ajuster la tension initiale du ressort 20, on manoeuvre la pièce 17 au moyen du six pans 17b afin que la partie 17a se visse plus ou moins dans le boîtier 1.

Plus le ressort 20 est tendu, plus la course de la pièce 13 est courte et plus grand sera l'effort maximum admis entre la jante 5 et le patin 30.

Plus le ressort 20 est lâche, plus la course de la pièce 13 est longue et plus faible sera l'effort maximum admis entre la jante 5 et le patin 30.

La manoeuvre de la pièce 17 par le six pans 17b est très simple et il est possible de corriger la tension du ressort 20 pour l'adapter à volonté en fonction de l'état du terrain, des conditions atmosphériques, etc.

Avec les dispositifs connus, l'effort de l'élément mobile (la jante 5 en l'occurrence) sur le patin de freinage s'exerce librement et peut aller, sans aucune difficulté, jusqu'au blocage de la roue. Selon l'invention, le patin 30 s'efface progressivement, au fur et à mesure que l'effort augmente, pour maintenir le freinage au-dessous du seuil critique pouvant bloquer la roue.

Le pivotement du patin 30 n'est pas brusque et il ne se déplace pas nécessairement en une seule fois selon l'angle β maximum. L'effort antagoniste du ressort 20 est permanent et le patin 30 peut même osciller automatiquement aussi bien dans le sens de l'ouverture de l'angle β que dans le sens de sa fermeture si l'effort de la jante 5 sur le patin varie, ce qui se produit, en particulier, lorsque l'état de la surface de roulage change, cas de la pratique du vélo dit "tous terrains" ou "VTT".

Lorsque l'effort issu de la rotation de la jante 5 devient plus faible que l'effort d'extension du ressort 20, celui-ci repousse la pièce 13 dont le pion 14 parcourt la lumière 15 dans le sens de la flèche F6, ce qui oblige la pièce 12 à se rabattre vers la jante 5, son pion 18 parcourant la lumière 19 selon la flèche F7.

Le mouvement elliptique qui en résulte, dans le sens des aiguilles d'une montre, est évoqué par la flèche F8 (figures 7 et 8).

Le caractère inévitablement schématique et statique des dessins ne doit pas faire oublier que le patin 30 est en une matière relativement élastique, de sorte que l'écartement du patin 30 ne se fait pas strictement selon son arête géométrique avant, comme on pourrait le penser en observant la rigoureuse linéarité de la face 30a de la figure 8. En réalité, le patin 30 se "déroule" un peu quand il s'écarte de la jante à la manière d'une semelle de chaussure pendant la marche et il est un peu déformé dans sa partie qui est appliquée contre la jante 5, si bien qu'il existe toujours une surface de contact, même très faible, quand l'angle β est maximum.

Tant que l'effort n'a pas atteint le seuil correspondant au tarage du ressort 20, le patin 30 reste dans la position de serrage maximum représentée sur les figures 5 et 6, de sorte que jamais le freinage n'est inférieur à ce qu'il devrait être. Il n'y a relâchement du patin 30 que si l'effort atteint une valeur élevée et réglable et retour au serrage du patin quand cet effort diminue.

Quand l'usager cesse d'agir sur la poignée de manoeuvre du frein, les pièces mobiles 12 et 13 reprennent leur position de repos des figures 1 à 3 et le ressort 6 ramène le boîtier 1 de la position de la figure 4 à la position de la figure 3.

Bien entendu, l'invention s'applique à toutes sortes de freins et pas seulement à ceux des véhicules à deux roues.

De même, l'Homme de Métier sait utiliser des moyens équivalents à ceux qui ont été décrits, tout particulièrement en ce qui concerne les moyens élastiques qui, dans la description ci-dessus sont constitués par le ressort 20, mais qui, dans la pratique peuvent être réalisés différemment : on peut substituer au ressort 20 une pièce en élastomère possédant sa propre élasticité, ce qui est le cas des pièces connues dans le commerce sous le nom de "SILENT BLOC". On pourrait également prévoir des moyens pneumatiques et/ou hydrauliques etc. Le choix de ces moyens dépend non seulement de considérations de prix mais aussi de poids, d'encombrement et de complexité.

On n'utilisera donc pas strictement la même version pour un 〈〈 vélo tous terrains 〉〉 et pour une moto de grosse cylindrée par exemple.

L'important étant d'obtenir le rappel du patin 30 (et des éléments qui le portent, ici la tige 26 et la monture 29), les moyens élastiques peuvent être disposés autrement qu'entre la pièce coulissante 13 et l'intérieur de la pièce 17.

## Revendications

1. Procédé de freinage d'un élément mobile tel qu'une roue, notamment pour véhicule à deux roues, qui consiste à appuyer au moins un organe de frottement (30) contre l'élément mobile (5) en appliquant un effort sur une surface de contact de l'élément mobile (5) en direction sensiblement normale afin d'engendrer par friction un effort de freinage dans le plan de la surface de contact tant qu'un freinage est nécessaire, caractérisé en ce qu'en outre le procédé consiste à diminuer durant le freinage, à partir d'un seuil déterminé de l'effort de freinage, corrélativement la superficie de la surface de contact, sans qu'elle ne devienne nulle.

2. Procédé selon la revendication 1, caractérisé en ce qu'il consiste à monter l'organe de frottement (30) de manière mobile par rapport à sa monture le long d'une trajectoire courbe afin qu'il soit libre de se déplacer angulairement par rapport à l'élément mobile (5) et à soumettre l'organe de frottement (30) à une force élastique antagoniste d'équilibrage.

3. Dispositif de freinage, notamment pour véhicule à deux roues, du type comprenant au moins une monture de patin de freinage, montée mobile entre une position de repos dans laquelle le patin est maintenu à faible distance d'un élément mobile tel qu'une roue, et une position active dans laquelle il est en contact avec ledit élément mobile, le patin étant en outre monté mobile par rapport à la monture, et des moyens étant prévus pour faire passer la monture de la position de repos à la position active et vice versa, caractérisé en ce que chaque patin de freinage (30) est monté mobile par rapport à sa monture le long d'une trajectoire courbe entre une position de début de freinage dans laquelle il est parallèle à l'élément mobile (5) et en contact avec celui-ci sensiblement sur toute sa surface nominale et une position dans laquelle ledit patin (30) fait un angle (β) par rapport audit élément mobile (5) et est en contact avec celui-ci selon une surface substantiellement inférieure à la surface nominale, un organe élastique antagoniste (20) sollicitant chaque patin (30) vers sa position de début de freinage.

4. Dispositif selon la revendication 3, caractérisé en ce que chaque patin (30) est solidaire d'une tige (26) qui est associée à une pièce (12) montée mobile par rapport à sa monture le long d'une trajectoire courbe entre une position initiale dans laquelle le patin (30) est en position active et parallèle à l'élément mobile (5) et une position dans laquelle le patin (30) fait un angle (β) avec ledit élément mobile (5).

5. Dispositif selon la revendication 4, caractérisé en ce que la pièce mobile par rapport à sa monture le long d'une trajectoire courbe (12) est associée à des moyens élastiques de sollicitation (20).

6. Dispositif selon la revendication 5, caractérisé en ce que les moyens élastiques de sollicitation sont constitués par un ressort (20).

7. Dispositif selon la revendication 5, caractérisé en ce que les moyens élastiques de sollicitation sont constitués par une pièce élastique, notamment une pièce pleine en une matière élastomère.

8. Dispositif selon la revendication 3, caractérisé en ce que les moyens élastiques de sollicitation (20) comprennent des moyens de tarage de l'effort exercé sur le patin de freinage (30).

9. Dispositif selon les revendications 6 et 8, caractérisé en ce que les moyens élastiques de sollicitation sont constitués par un ressort (20) et les moyens de tarage par des organes de réglage de la compression du ressort (20).

## Claims

1. Method for braking a movable element such as a wheel, particularly for a two-wheeled vehicle, which consists in pressing at least one friction member (30) against the movable element (5) by applying a force to a contact surface of the movable element (5) in a substantially normal direction so as to generate, by friction, a brake force in the plane of the contact surface when braking is needed, characterised in that the method further consists in correlatively diminishing during braking, starting from a given threshold of brake force, the surface of the contact surface, without it becoming zero.

2. Method according to Claim 1, characterised in that it consists in mounting the friction member (30) in a movable manner relative to its mounting along a curved trajectory so that it is free to be displaced angularly relative to the movable element (5) and in subjecting the friction member (30) to a balancing counteracting resilient force.

3. Braking device, particularly for a two-wheeled vehicle, of the type comprising at least one brake shoe mounting, mounted so as to be movable between a rest position in which the shoe is held a short distance away from a movable element such as a wheel, and an active position in which it is in contact with said movable element, the shoe further being mounted so as to be movable relative to the mounting, and means being provided in order to make the mounting move from the rest position to the active position and vice versa, characterised in that each brake shoe (30) is mounted so as to be movable relative to its mounting along a curved trajectory between a braking start position in which it is parallel to the movable element (5) and in contact therewith over substantially its whole nominal surface area and a position in which said shoe (30) forms an angle (β) relative to said movable element (5) and is in contact therewith along a surface substantially less than the nominal surface, a counteracting resilient member (20) acting on each shoe (30) towards its braking start position.

4. Device according to Claim 3, characterised in that each shoe (30) is integral with a rod (26), which is associated with a part (12) mounted so as to be movable relative to its mounting along a curved trajectory between an initial position in which the shoe (30) is in an active position, parallel to the movable element (5) and a position in which the shoe (30) forms an angle (β) with said movable element (5).

5. Device according to Claim 4, characterised in that the part that is movable relative to its mounting along a curved trajectory (12) is associated with resilient actuation means (20).

6. Device according to Claim 5, characterised in that the resilient actuation means are constituted by a spring (20).

7. Device according to Claim 5, characterised in that the resilient actuation means are constituted by a resilient part, particularly a solid part made of elastomeric material.

8. Device according to Claim 3, characterised in that the resilient actuation means (20) comprise means for calibrating the force exerted on the brake shoe (30).

9. Device according to Claims 6 and 8, characterised in that the resilient actuation means are constituted by a spring (20) and the calibration means by members for adjusting the compression of the spring (20).

## Patentansprüche

1. Bremsverfahren für ein bewegliches Element, wie z.B. ein Rad, insbesondere für ein zweirädriges Fahrzeug, das darin besteht, mindestens ein Reibungsorgan (30) gegen das bewegliche Element (5) zu drücken, indem eine Kraft auf eine Kontaktfläche des beweglichen Elements (5) in einer im wesentlichen senkrechten Richtung ausgeübt wird, um durch Reibung eine Bremskraft in der Ebene der Kontaktfläche zu erzeugen, wenn eine Bremsung notwendig ist, dadurch gekennzeichnet, daß das Verfahren außerdem darin besteht, ausgehend von einem bestimmten Schwellwert der Bremskraft während des Bremsens die Kontaktfläche korrelativ zu verringern, ohne daß sie zu Null wird.

2. Verfahren nach Anspruch 1, dadurch gekennzeichnet, daß es darin besteht, das Reibungsorgan (30) in Bezug auf seine Halterung entlang einer gekrümmten Strecke beweglich zu montieren, so daß es sich in Bezug auf das bewegliche Element (5) frei winkelmäßig bewegen kann, und das Reibungsorgan (30) einer elastischen, gegenwirkenden Ausgleichskraft zu unterwerfen.

3. Bremsvorrichtung, insbesondere für ein zweirädriges Fahrzeug, die mindestens eine Bremsklotz-Halterung aufweist, die zwischen einer Ruhestellung, in der der Bremsklotz in geringem Abstand zu einem beweglichen Element wie z.B. einem Rad gehalten wird, und einer aktiven Stellung beweglich montiert ist, in der er mit dem beweglichen Element in Kontakt steht, wobei der Bremsklotz weiter in Bezug auf die Halterung beweglich montiert ist, und Mittel vorgesehen sind, um die Halterung aus der Ruhestellung in die aktive Stellung und umgekehrt übergehen zu lassen, dadurch gekennzeichnet, daß jeder Bremsklotz (30) in Bezug auf seine Halterung entlang einer gekrümmten Strecke zwischen einer Stellung des Beginns des Bremsvorgangs, in der er parallel zum beweglichen Element (5) ist und mit diesem über im wesentlichen seine ganze Nennfläche in Kontakt steht, und einer Stellung beweglich montiert ist, in der dieser Bremsklotz (30) einen Winkel (β) in Bezug auf das bewegliche Element (5) einnimmt und mit diesem Element über eine Fläche in Verbindung steht, die wesentlich kleiner ist als die Nennfläche, wobei ein elastisches, gegenwirkendes Organ (20) jeden Bremsklotz (30) in seine Stellung des Beginns des Bremsvorgangs zieht.

4. Vorrichtung nach Anspruch 3, dadurch gekennzeichnet, daß jeder Bremsklotz (30) fest mit einer Stange (26) verbunden ist, die einem Teil (12) zugeordnet ist, das in Bezug auf seine Halterung entlang einer gekrümmten Strecke zwischen einer ursprünglichen Stellung, in der der Bremsklotz (30) in der aktiven Stellung und parallel zum beweglichen Element (5) ist, und einer Stellung beweglich montiert ist, in der der Bremsklotz (30) einen Winkel (β) mit dem beweglichen Element (5) bildet.

5. Vorrichtung nach Anspruch 4, dadurch gekennzeichnet, daß das in Bezug auf seine Halterung entlang einer gekrümmten Strecke bewegliche Teil (12) elastischen Spannungsmitteln (20) zugeordnet ist.

6. Vorrichtung nach Anspruch 5, dadurch gekennzeichnet, daß die elastischen Spannungsmittel aus einer Feder (20) bestehen.

7. Vorrichtung nach Anspruch 5, dadurch gekennzeichnet, daß die elastischen Spannungsmittel aus einem elastischen Teil bestehen, insbesondere einem massiven Teil aus Elastomermaterial.

8. Vorrichtung nach Anspruch 3, dadurch gekennzeichnet, daß die elastischen Spannungsmittel (20) Mittel zur Regulierung der auf den Bremsklotz (30) ausgeübten Kraft enthalten.

9. Vorrichtung nach den Ansprüchen 6 und 8, dadurch gekennzeichnet, daß die elastischen Spannungsmittel aus einer Feder (20) und die Mittel zur Regulierung aus Organen zur Einstellung der Komprimierung der Feder (20) bestehen.
